# EUROPEAN PATENT APPLICATION

(11) **EP 4 759 631 A1**
(43) Date of publication of application: **17.06.2026**
(21) Application number: 24851555.3
(22) Date of filing: 18.07.2024
(51) Int. Cl.: B60N 2/427, B60R 21/207

(54) **OCCUPANT PROTECTION DEVICE**

(30) Priority: 08.08.2023 JP 2023129265
(71) Applicant: AUTOLIV DEVELOPMENT AB, 44783 Vargarda (JP)
(72) Inventor: ISHIGAKI, Ryota, Yokohama-shi, Kanagawa 222-8580 (JP); ABE, Kazuhiro, Yokohama-shi, Kanagawa 222-8580 (JP)
(74) Representative: Feucker, Max Martin
(86) International application number: PCT/JP2024/025719
(87) International publication number: WO 2025/033126

(57) **Abstract**

An occupant protection device that contributes to improving the restraint performance of a waist part of an occupant is disclosed. The occupant protection device 30, which is provided inside or below a seat cushion 2 of a vehicle seat 100, includes an airbag cushion 32 that can be expanded to push up a seat surface 26 of the seat cushion 2, and at least one inflator 34 (inflators 34a and 34b) that is activated in the event of a vehicle emergency. The at least one inflator 34 is configured to be activated at least once in the event of a vehicle emergency to supply expansion gas to an internal space of the airbag cushion 32, and the timing of supplying the expansion gas is controlled by varying the timing of gas generation from at least one gas generating part based on sensing from the vehicle.

## Description

### TECHNICAL FIELD

The present invention relates to an occupant protection device provided inside or below a seat cushion of a vehicle seat.

### CONVENTIONAL TECHNOLOGY

When a vehicle is involved in a frontal collision, an occupant wearing a seat belt tends to move forward due to inertia. Patent Document 1 describes an occupant protection device which, in the event of such a frontal collision, raises a front-end portion of a seat cushion by instantaneously expanding an airbag in a vehicle seat, thereby suppressing forward movement of a waist part of an occupant.

### RELATED ART DOCUMENTS

### PATENT DOCUMENTS

Patent Document 1: Japanese Unexamined Patent Application 2007-118820

### SUMMARY OF THE INVENTION

### PROBLEM TO BE SOLVED BY THE INVENTION

In Patent Document 1, the airbag is secured to a seat pan and, when expanded, pushes up the lower front-end of the seat cushion. However, for example, in the later stages of a collision, the internal pressure of the expanded airbag may decrease due to the load from the occupant, and the restraining force on the waist part of the occupant may decrease.

An object of the present invention is to provide an occupant protection device that contributes to improving the waist part restraining performance of an occupant.

### MEANS FOR SOLVING THE PROBLEM

An occupant protection device according to an aspect of the present invention is an occupant protection device provided inside or below a seat cushion of a vehicle seat, the occupant protection device including:
an airbag cushion expandable so as to push up a seating surface of the seat cushion; and
at least one inflator that activates in a vehicle emergency; wherein
the at least one inflator is configured to activate at least twice at respective timings during the vehicle emergency to supply expansion gas to an internal space of the airbag cushion at least twice.

According to this aspect, expansion gas is supplied to the airbag cushion at least twice at time intervals spaced apart. The first expansion of the airbag cushion pushes up the seat surface and restrains the waist part of the occupant. Even if the internal pressure of the airbag cushion drops thereafter, the second expansion of the airbag cushion increases the internal pressure of the airbag cushion, and the force pushing up the seat surface increases. Therefore, the restraining force on the waist part of the occupant can be maintained.

As a more detailed example, a case will be described in which a vehicle experiences a frontal collision while an occupant is seated on a seat cushion in a normal posture with a seat belt fastened. At this time, with the first expansion, the airbag cushion lifts the area around the thighs near the buttocks of the occupant, thereby suppressing forward movement of the waist part of the occupant and promoting clockwise rotation of the pelvis of the occupant (backward rotation of the waist part). This suppresses movement of the occupant's chest. Furthermore, at a timing thereafter (for example, when the internal pressure of the airbag cushion drops and the waist restraining force may decrease), a second expansion is performed. This allows the airbag cushion to lift the area near the thighs again, thereby controlling the behavior of the waist part (suppressing forward movement and promoting backward rotation). Therefore, movement of the occupant's chest can be suppressed throughout the entire collision period, including the later part of the collision period, and the waist part restraint performance can be improved.

An occupant protection device according to an aspect of the present invention is an occupant protection device provided inside or below a seat cushion of a vehicle seat, the occupant protection device including:
an airbag cushion expandable so as to push up a seat surface of the seat cushion; and
at least one inflator that activates in a vehicle emergency,
wherein
the at least one inflator is configured to operate at least once at a timing during the vehicle emergency to supply expansion gas to an internal space of the airbag cushion, and
supply timing of the expansion gas to the airbag cushion is controlled, based on sensing from a vehicle, by variably controlling a timing at which gas is generated from at least one or more gas-generating parts.

According to this aspect, the timing of supplying expansion gas is controlled, so that, for example, the airbag cushion can be configured so that expansion gas is supplied at least twice with a time interval between each supply. Therefore, similar to the above, movement of the occupant's chest can be suppressed throughout the entire collision period, including the later part of the collision period, and the waist part performance can be improved.

### BRIEF DESCRIPTION OF THE DRAWINGS

FIG. 1A is a perspective view depicting an external shape of a vehicle seat provided with an occupant protection device according to an embodiment;
FIG. 1B is a perspective view depicting a frame structure inside the vehicle seat of FIG. 1A;
FIG. 2 is a diagram depicting an occupant protection device according to an embodiment in a side cross section of a vehicle seat, in which (a) depicts a state before expansion of an airbag cushion, and (b) depicts a state after expansion of the airbag cushion;
FIG. 3 is a block diagram depicting a control configuration of the occupant protection device according to Example 1;
FIG. 4 is a flowchart depicting a control method for the occupant protection device according to Example 1;
FIG. 5 is a graph depicting the internal pressure of the airbag cushion over time when expanded twice in Example 1;
FIG. 6 is a graph depicting chest deflection of an occupant over time in a vehicle emergency, relating to a comparative example and Example 1;
FIG. 7 is a diagram describing the effect of the occupant protection device according to an embodiment from another perspective, in which (a) depicts a comparative example and (b) depicts Example 1;
FIG. 8 is a block diagram depicting a control configuration of an occupant protection device according to Example 2; and
FIG. 9 is a flowchart depicting a control method for an occupant protection device according to Example 2.

### EMBODIMENTS OF THE INVENTION

An occupant protection device according to preferred embodiments of the present invention will be described with reference to the accompanying drawings. In the present document, up and down, left and right, and front and rear are defined as follows. When an occupant is seated in a seat (vehicle seat) in a regular posture, a direction the occupant faces is referred to as the front, an opposite direction is referred to as the rear, and a direction indicating a coordinate axis is referred to as a front-to-back direction. In addition, when the occupant is seated in the vehicle seat in a regular posture, the right side of the occupant is referred to as a right direction, the left side of the occupant is referred to as a left direction, and a direction indicating a coordinate axis is referred to as a left-right direction. Similarly, when the occupant is seated in a regular posture, a head direction of the occupant is referred to as up, a waist part direction of the occupant is referred to as down, and a direction indicating a coordinate axis is referred to as an up-down direction.

Furthermore, "occupant" in the present document is an occupant/passenger in accordance with a frontal collision test dummy (Hybrid III AM50; human body dummy for frontal collision test set forth in specification [49CFR Part 572 Subpart E and O] of NHTSA [National Highway Traffic Safety Association]) with a physique equivalent to the average male in the United States, having an approximate size of 175 cm height, 88 cm sitting height, and 78 kg weight.

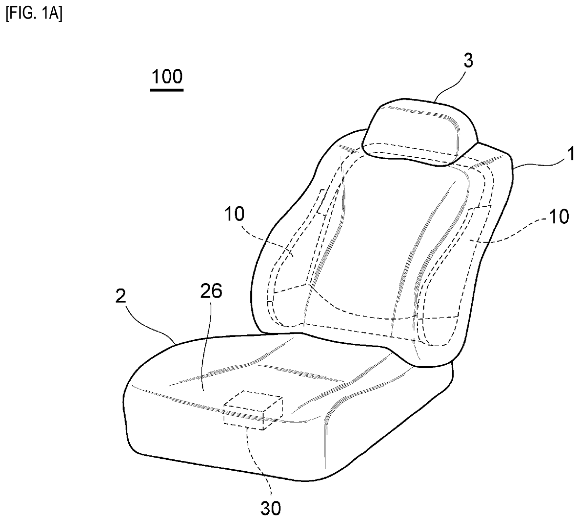

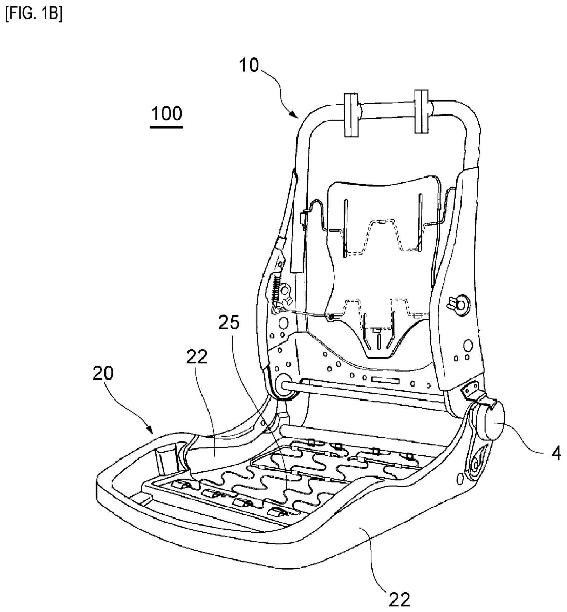

As depicted in FIG. 1A and 1B, the vehicle seat 100 is provided with a seat back 1 that supports the back of an occupant, a seat cushion 2 on which the occupant is seated, and a headrest 3 that supports the head of the occupant. The vehicle seat 100 is, for example, a driver seat or passenger seat, but may be a rear seat.

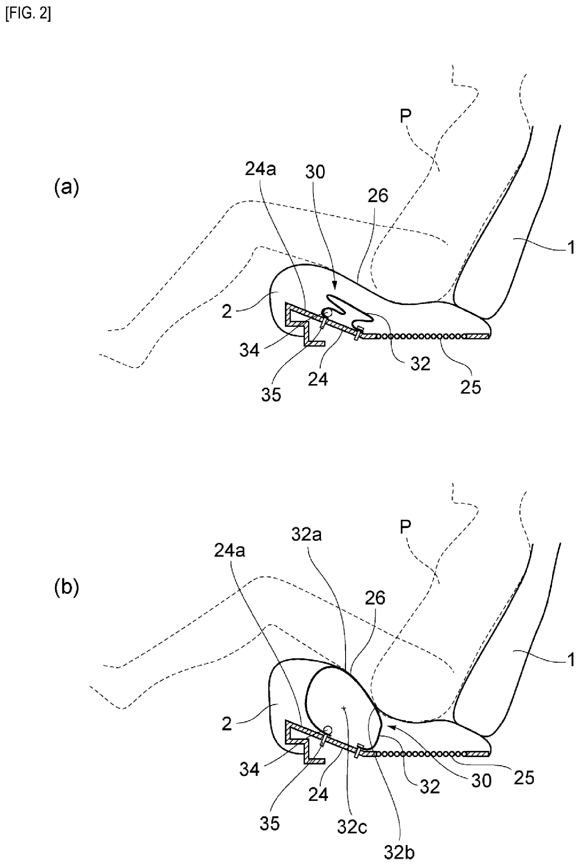

A back frame 10 and a seat frame 20 that form the framework of the seat are provided inside the seat back 1 and the seat cushion 2, respectively. The back frame 10 and the seat frame 20 are made of processed metal components or hard resin, and are connected to each other via a reclining mechanism 4. The seat frame 20 has a pair of side frames 22, 22 spaced apart from each other on the left and right, and a seat pan 24 (see FIG. 2) is constructed between the front parts of the pair of side frames 22, 22. The seat pan 24 is positioned below the front part of the seat cushion 2, and a spring 25 for supporting the seat cushion 2 is provided behind the seat pan 24.

The seat cushion 2 has, for example, a seat pad made of a urethane foam material or the like covering a surface and perimeter of the seating frame 20, and a seat cover made of leather, fabric or the like covering a surface of the seat pad. An upper surface of the seat cover constitutes a surface on which the occupant sits, in other words, a seat surface 26 of the seat cushion 2.

The occupant protection device 30 is provided inside or below the seat cushion 2. For example, the occupant protection device 30 is provided inside the seat cushion 2 and is covered by the seat cover. In this case, the occupant protection device 30 may be provided on an upper surface of the seat pan 24. Alternatively, if the seat pan 24 is not provided, placing in the seating frame 20 is possible. In another example, the occupant protection device 30 is provided below the seat cushion 2 instead of inside the seat cushion 2. In this case, for example, the occupant protection device 30 is attached on a bracket secured to the vehicle seat 100 below the seat cushion 2. Hereinafter, an example in which the occupant protection device 30 is provided on the upper surface of the seat pan 24 will be described.

As depicted in FIG. 2, the occupant protection device 30 includes an airbag cushion 32 that is expandable to push up the seat surface 26 of the seat cushion 2, and at least one inflator 34 that is activated in the event of a vehicle emergency. An example of a vehicle emergency is a frontal collision of a vehicle.

The airbag cushion 32 is a bag body and expands by receiving the supply of gas from the inflator 34. The airbag cushion 32 is formed into a bag shape by a method of sewing or adhering one or more pieces of base fabric (nonwoven fabric or the like) at appropriate positions, or by a method of weaving using an OPW (One-Piece Woven) method. The airbag cushion 32 is disposed on a mounting surface 24a of the seat pan 24 in, for example, a folded state. The folding manner is arbitrary, and may be, for example, an accordion-like shape, a roll-like shape, or a combination thereof. The airbag cushion 32 in a folded state is deployed by receiving gas from the inflator 34 and expands with the mounting surface 24a of the seat pan 24 acting as a reaction surface.

The inflator 34 is electrically connected to a vehicle-side ECU. For example, the inflator 34 receives a signal that an impact upon a frontal collision of the vehicle has been detected from the vehicle side ECU and operates to instantly supply the gas to the airbag cushion 32. As the inflator 34, either a disk type or a cylinder type may be used, and various types may be employed, such as those filled with a gas-generating agent, compressed gas, or both thereof. Known inflators generally fall into three categories: These are pyrotechnic inflators, compressed gas inflators, and hybrid inflators. Pyrotechnic inflators depend solely on combustion to provide expansion gas, while compressed gas inflators use minimal explosives to open a chamber to release compressed expansion gas. Hybrid inflators use a combination of combustion and compressed gas storage to fill the cushion with expansion gas. As an example of the present embodiment, the cylinder-type inflator 34 has a squib (ignition device) at an open end of a cylindrical body with a bottom. Furthermore, when a gas-generating agent in the cylindrical body is ignited using the squib, gas is generated, and the gas for expansion is supplied into the airbag cushion 32 from a plurality of discharge holes located on a peripheral surface of the cylindrical body.

The airbag cushion 32 can be attached to the seat pan 24 in a variety of ways. For example, the airbag cushion 32 may be attached to the seat pan 24 at the front and/or rear portion thereof and/or at an intermediate portion thereof via fasteners such as bolts or rivets. In the example of FIG. 2, the airbag cushion 32 is attached in front and rear portions. In addition, the attachment point of the airbag cushion 32 to the seat pan 24 can also serve as the attachment point for attaching the inflator 34 to the seat pan 24. For example, when the aforementioned cylindrical body with a bottom is used as the inflator 34, an axial direction of the cylindrical body is aligned with the left-right direction, and the cylindrical body is accommodated inside the airbag cushion 32. Furthermore, a stud bolt 35 protruding from the outer periphery of the cylindrical body is caused to protrude outside the airbag cushion 32, and inserted through the seat pan 24 from the mounting surface 24a side, and is fastened to the seat pan 24 by a nut. In this manner, the inflator 34 and the airbag cushion 32 are fastened together to the mounting surface 24a of the seat pan 24 by the stud bolt 35 and nut.

The airbag cushion 32 is positioned so as to push up the area near the thighs of an occupant P who is seated on the seat cushion 2 in a normal posture and wearing a seat belt (omitted in FIG. 2). For example, the center 32c of the expanded airbag cushion 32 is positioned below the thighs of the occupant P near the buttocks. When expanded, the airbag cushion 32 lifts the thighs of the occupant P near the buttocks via the seat surface 26, and lifts the entire area from the thighs to the knees of the occupant P. This causes a force to act on the pelvis of the occupant P in a clockwise direction (backward rotation of the waist part). This action prevents the vertebrae of the occupant P from being pushed up, and keeps the spine of the occupant P lower. In other words, since the spine is not pushed up, no phase difference occurs in the ribs, and no load is placed on the chest of the occupant P, while suppressing forward movement of the waist part of the occupant P. In addition, occurrence of the submarine phenomenon is also suppressed.

The shape of the airbag cushion 32 when expanded and deployed takes the form depicted in FIG. 2(b). Specifically, in the expanded and deployed state, the top of a front part 32a of the airbag cushion 32 is positioned higher than the top of a rear part 32b. The front part 32a is the portion positioned forward of the center 32c of the airbag cushion 32, and the top of the front part 32a may be near the front-end part of the airbag cushion 32. The rear part 32b is the portion positioned behind the center 32c of the airbag cushion 32, and the top of the rear part 32b can be at or near the rear end part of the airbag cushion 32. Comparing the lift amount provided by the front part 32a and the rear part 32b for the occupant P, the top of the front part 32a can be said to lift the portion from the thigh to the knee of occupant P higher than the top of the rear part 32b.

Here, in the present embodiment, at least one inflator 34 is configured to operate at least twice in the event of a vehicle emergency, and to supply expansion gas to the internal space of the airbag cushion 32 at least twice. For the sake of convenience, the following description will be given of an example in which the number of times of operation timing is two. Further, as an aspect in which such expansion is performed twice (a plurality of times), there is an aspect in which two (a plurality of) inflators 34 are used and an aspect in which one inflator 34 is used, and hereinafter, the former is described as Example 1 and the latter is described as Example 2.

### Example 1

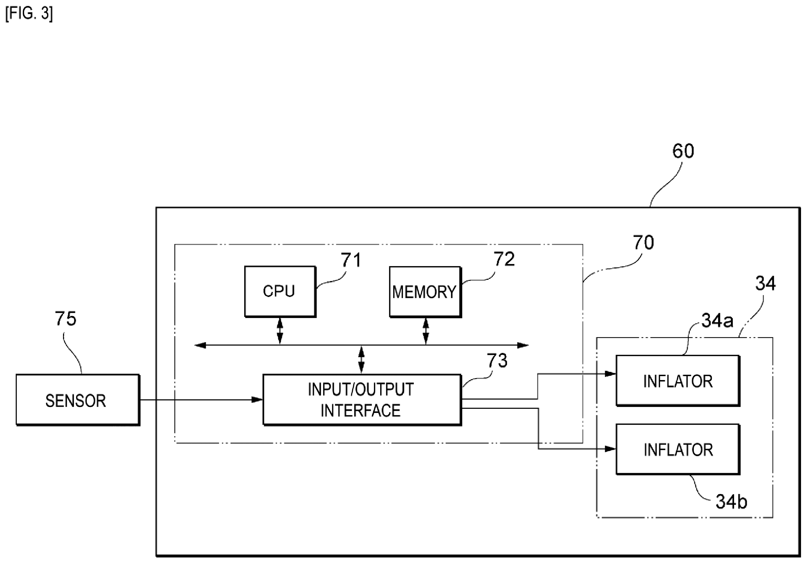

FIG. 3 depicts a control configuration 60 including inflators 34a and 34b of the occupant protection device 30. The at least one inflator 34 includes a first inflator 34a and a second inflator 34b. The inflators 34a and 34b are each configured to supply expansion gas to the internal space of the airbag cushion 32. The inflators 34a and 34b have the same performance. Ensuring the same performance is desirable in terms of the quality of module control.

The inflators 34a and 34b may be arranged side by side, either front to back or left and right. For example, the inflators 34a and 34b may be provided at different positions in the front-to-back direction of the vehicle. For example, the front and rear of the airbag cushion 32 may be attached to the seat pan 24 by the inflator 34a at the front and the inflator 34b at the rear. In addition, the inflators 34a and 34b may also be provided along the front-to-back direction of the vehicle. For example, in the case of cylindrical inflators 34a and 34b, the axes of the cylinders can be aligned in the front-to-back direction of the vehicle. In another embodiment, the inflators 34a and 34b may be provided at different positions in the vehicle width direction, and in this case, they may be provided along the vehicle width direction.

A controller 70 for the occupant protection device 30 is an electronic control unit (ECU) including a CPU 71, memory 72, and an input/output interface 73, and is configured as, for example, a microcomputer. The CPU 71 executes a desired operation in accordance with a control program to perform various processes and controls. A memory 72 includes, for example, a ROM and a RAM. The ROM stores control programs and control data to be processed by the CPU 71, and the RAM is mainly used as the work area where various types of operations for control processing are performed. The input/output interface 73 is electrically connected to an external sensor 75 and the inflators 34a and 34b. The sensor 75 is for detecting a vehicle collision, and may be any of various known types, such as an acceleration sensor or a pressure sensor. With this configuration, the controller 70 receives an input signal from the sensor 75 and outputs an activation signal to the inflators 34a and 34b in the event of a vehicle emergency (determines whether or not the vehicle has experienced a frontal collision, and upon determination that a frontal collision has occurred).

Note that the controller 70 can be configured as an airbag ECU capable of communicating with the vehicle-side ECU, and can control operation of not only the inflators 34a and 34b of the occupant protection device 30, but also the inflators in other airbag devices (for example, front airbag devices, curtain airbag devices, and the like). In another embodiment, determination of whether or not the vehicle has experienced a frontal collision may be performed by the vehicle-side ECU, and the controller 70 may receive collision information from the vehicle-side ECU and output an activation signal to the inflators 34a and 34b.

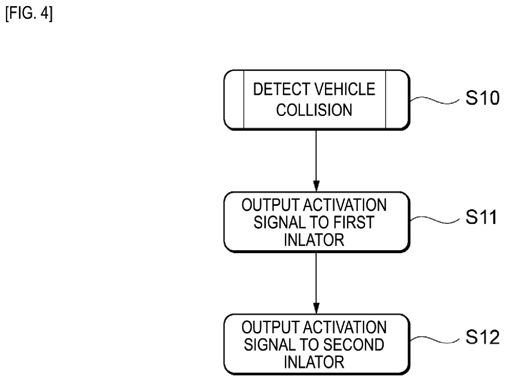

FIG. 4 is a flowchart depicting a control method for the occupant protection device 30. This control method is executed by the controller 70 when a vehicle collision occurs (S10).

With this control method, the inflators 34a and 34b are activated at different timings. In other words, the inflator 34a is activated at a first timing t1, and the inflator 34b is activated at a second timing t2 that is different from the first timing. Here, the controller 70 changes the output timing of the activation signal so that the second inflator 34b activates later than the first inflator 34a. Specifically, first, an ignition signal for supplying expansion gas from the first inflator 34a to the airbag cushion 32 is output (S11), and next, an ignition signal for supplying expansion gas from the second inflator 34b to the airbag cushion 32 is output (S12).

Here, the difference in the timing of activation of the inflators 34a and 34b (delay time of ignition) may be, for example, 15 to 40 msec. This is because if the difference is less than 15 msec, the inflators 34a and 34b are activated almost simultaneously, and the internal pressure of the airbag cushion 32 may rise excessively at the initial stage of expansion of the airbag cushion 32. In addition, if the time exceeds 40 msec, the internal pressure of the airbag cushion 32 will decrease too much. By setting the range to 15 to 40 msec, the internal pressure of the airbag cushion 32 at the initial stage of expansion can be kept within an appropriate range, and the internal pressure of the airbag cushion 32 can be increased again before the internal pressure of the airbag cushion 32 drops too much.

Note that within the range of 15 to 40 msec, 25 msec or +/- 35 msec is preferable. It should be noted that this delay time is greatly affected by the type and the capability of the inflator to be used.

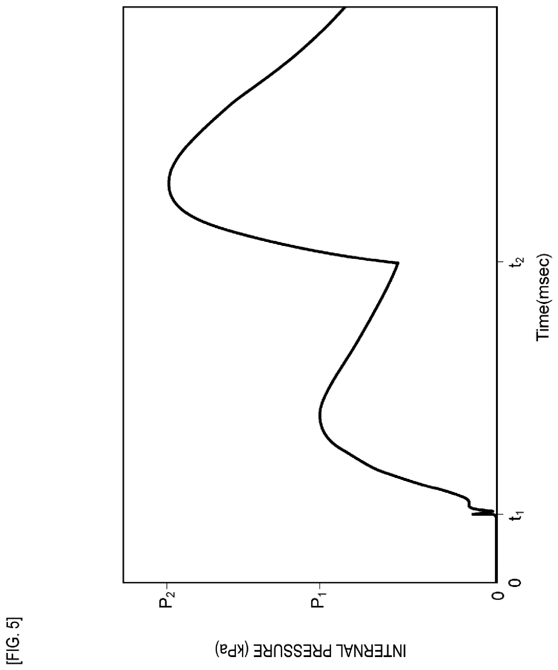

FIG. 5 is a graph depicting the internal pressure of the airbag cushion 32 over time when the airbag cushion 32 is expanded twice. The internal pressure of the airbag cushion 32 is zero until a vehicle emergency occurs. When the inflator 34a is activated at the first timing t1 in the event of a vehicle emergency, the internal pressure of the airbag cushion 32 increases. This causes the airbag cushion 32 to deploy, performing a first expansion. After the internal pressure of the airbag cushion 32 reaches an initial peak value P1, the load from the occupant P causes the internal pressure to begin to decrease. Subsequently, if the inflator 34b is activated at the second timing t2 before the internal pressure of the airbag cushion 32 drops completely, the internal pressure of the airbag cushion 32 rises again. This causes the airbag cushion 32 to expand a second time. The internal pressure of the airbag cushion 32 exceeds the initial peak value P1 and reaches a later peak value P2, and then begins to decrease due to the load from the occupant P. The later peak value P2 is larger than the initial peak value P1, and if inflators 34a and 34b have the same performance as mentioned above, the later peak value P2 can be about twice the initial peak value P1.

Here, the second timing t2 can be set to the timing when the internal pressure of the airbag cushion 32 reaches, for example, 50% of the initial peak value P1, as depicted in FIG. 5. In other embodiments, the timing may also be when the internal pressure reaches 70%, 60%, 40%, 30%, or 20% of the initial peak value P1.

In addition, the behavior of the expansion and deployment of the airbag cushion 32 can be controlled by the arrangement of inflators 34a and 34b. For example, the inflator 34a that ignites in the first stage is provided as far forward as possible in the front-to-back direction of the vehicle. As an example, the inflator 34a is arranged on the front side of the vehicle, and the inflator 34b is arranged on the rear side of the vehicle, respectively. As a result, at an initial-stage ignition timing (first timing t1), expansion gas is supplied earlier and in a larger amount to a front portion of the folded airbag cushion 32 than to a rear portion thereof, and therefore, the front part 32a expands and deploys earlier and to a greater extent than the rear part 32b. Furthermore, after the second-stage ignition (second timing t2), when the internal pressure of airbag cushion 32 rises and reaches a maximum, the airbag cushion 32 is fully deployed, and the force pushing up the seat surface reaches a maximum.

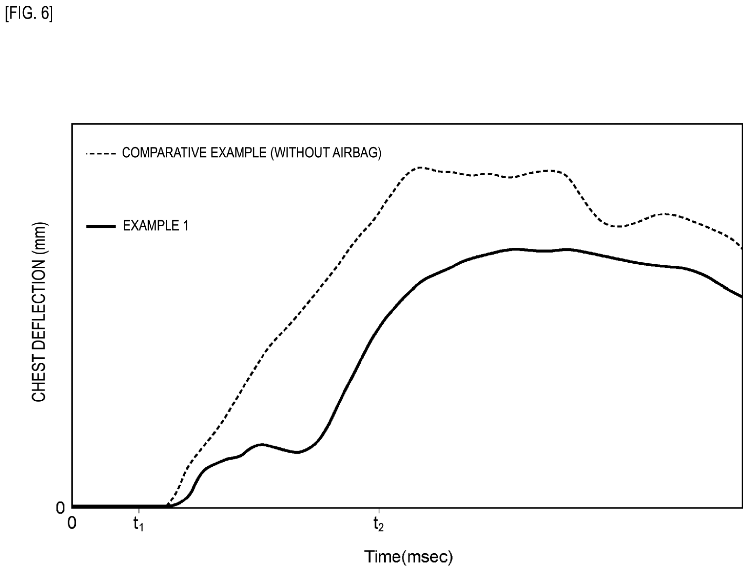

FIG. 6 is a graph depicting the chest deflection of the occupant P over time in a vehicle emergency, in relation to the comparative example and Example 1. The occupant P is seated on the seat cushion 2 in a normal posture and wearing a seat belt. In the comparative example, the occupant protection device 30 is not provided. In the comparative example, in the event of a vehicle emergency, chest deflection of the occupant P continues to increase over time.

In contrast to this, in the case of Example 1, in the event of a vehicle emergency, the first inflator 34a is activated at the first timing t1. Therefore, the airbag cushion 32 expands for the first time, lifting up the area of the occupant P's thighs near the buttocks. This restricts the forward movement of the waist part of the occupant P and encourages the waist part of the occupant P to rotate backward. This suppresses movement of the chest of the occupant P. In FIG. 6, attention is directed to the fact that chest deflection is reduced, as compared with a comparative example, between timing t1 and timing t2.

Furthermore, in Example 1, the second inflator 34b is then activated at a timing t2. Therefore, the airbag cushion 32 expands for a second time, again lifting up the area near the thighs of the occupant P, which is close to the buttocks. This again controls the behavior of the waist part of the occupant P (suppressing forward movement and promoting backward rotation), and suppresses movement of the chest of the occupant P. In FIG. 6, note that the peak of chest deflection is reduced after timing t2 compared to the comparative example.

In this manner, according to Example 1, movement of the chest of the occupant P can be suppressed throughout the entire collision period, including the later part of the collision period (for example, after timing t1), and the waist part restraint performance can be improved.

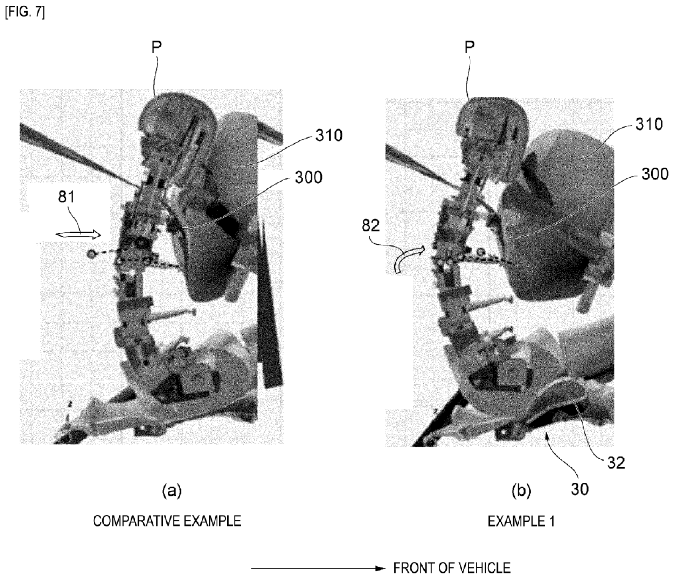

FIG. 7 is a diagram for describing the effect of Example 1 from another perspective, where (a) depicts a comparative example and (b) depicts Example 1. In this comparative example as well, the occupant protection device 30 is not provided. With the comparative example, in the event of a vehicle emergency, the sternum of the occupant P follows a linear trajectory in the front-to-back direction (see arrow 81). In contrast, in the case of Example 1, in the event of a vehicle emergency, the sternum of the occupant P follows an arcuate path (see arrow 82). As a result, chest sagging is suppressed.

In other words, in Example 1, when the airbag cushion 32 is deployed to restrain the occupant P at the waist, a force acts to push the waist part and the entire spine connected thereto upward. As a result, the spine behind the sternum of the occupant P moves upward while remaining stationary in the front-to-back direction of the vehicle. Since this is a movement that occurs during a frontal collision, a force is applied to the occupant P that moves him/her relatively forward, but as a result of the deployment of this airbag cushion 32, a force is applied that moves the occupant P's waist to spine upward, as described above, and as a result, the occupant P's sternum moves in a direction downward and forward of the occupant P. At this time, the occupant P's sternum falls forward and diagonally downward, which prevents the distance between the sternum and the seat belt 300 and front airbag cushion 310 from decreasing in the direction of movement of the tip end portion of the sternum (in other words, increases the gap), and as a result, chest deflection due to the force received by the occupant P from the seat belt 300 and front airbag cushion 310 can be suppressed.

### Example 2

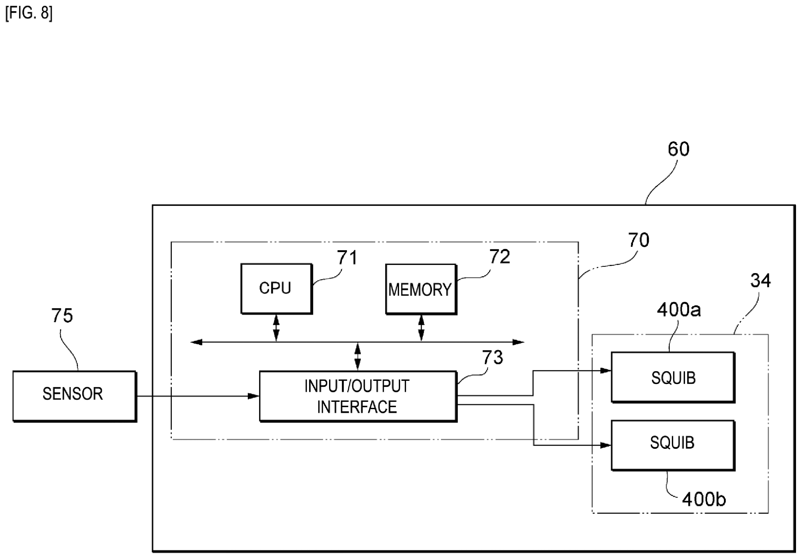

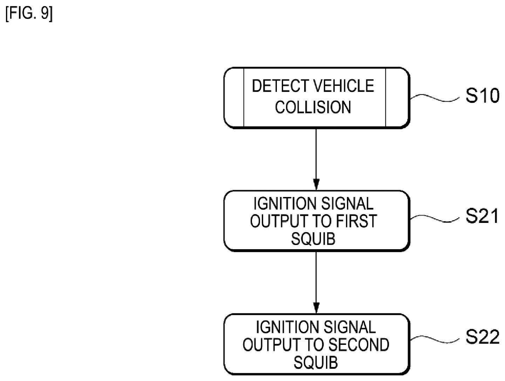

Next, Example 2 will be described with reference to FIGS. 8 and 9. Here, there is one inflator 34. Note that the same reference numerals are used to designate the same parts as in Example 1, and the description thereof will be omitted.

As depicted in FIG. 8, the inflator 34 has a plurality of squibs including a first squib 400a and a second squib 400b that are each ignited in the event of a vehicle emergency. As described above, the inflator 34 may be either a disk type or a cylinder type. For example, the inflator 34 has two (plural) gas generating parts corresponding to the squibs 400a and 400b. The inflator 34 generates gas by igniting the gas generating agent in a first of the gas generating parts with the squib 400a, and supplies the gas for expansion into the airbag cushion 32. In addition, the inflator 34 also generates gas by igniting the gas generating agent in the other gas generating part with the squib 400b, and supplies the gas for expansion into the airbag cushion 32.

The controller 70 in the occupant protection device 30 includes a CPU 71, memory 72, and an input/output interface 73, and receives an input signal from a sensor 75 and outputs an ignition signal to the squibs 400a and 400b in the event of a vehicle emergency.

As depicted in FIG. 9, the squibs 400a and 400b are ignited at different timings. In other words, the squib 400a is activated at a first timing t1, and the squib 400b is activated at a second timing t2. Specifically, first, an ignition signal for supplying expansion gas from the first squib 400a to the airbag cushion 32 is output (S21), and next, an ignition signal for supplying expansion gas from the second squib 400b to the airbag cushion 32 is output (S22). The difference (t2 - t1) between the ignition timings of the squibs 400a and 400b may be, for example, 15 to 40 msec, similar to the difference between the activation timings of the inflators 34a and 34b in Example 1.

Therefore, Example 2 also functions in the same way as Example 1. In other words, the changes in internal pressure, chest deflection, and the like depicted in FIGS. 5 to 7 result in suppressing movement of the chest of the occupant P throughout the entire collision period, including the later part of the collision period (for example, after timing t1), thereby improving waist part restraint performance.

The occupant protection device 30 according to the embodiment including Example 1 and Example 2 described above can be understood from another perspective as follows. In other words, the occupant protection device 30 according to the embodiment is an occupant protection device 30 that is provided inside or below the seat cushion 2 of the vehicle seat 100, and includes an airbag cushion 32 that can be expanded to push up the seat surface 26 of the seat cushion 2, and at least one inflator 34 that is activated in the event of a vehicle emergency, and the at least one inflator 34 is configured to be activated at least once in the event of a vehicle emergency to supply expansion gas to the internal space of the airbag cushion 32, and the timing of supplying the airbag cushion 32 is controlled by varying the timing of gas generation from at least one or more gas generating parts based on sensing from the vehicle (information from a sensor 75).

This means that the mass flow can be controlled by, for example, the explosive shape of the single inflator 34 or the compartment structure.

The embodiment described above is for ease of understanding of the present invention and is not intended to be construed as limiting the present invention. Elements included in the embodiment, as well as arrangements, materials, conditions, shapes, sizes, and the like thereof, are not limited to those exemplified, but rather can be appropriately changed.

For example, instead of the configuration in which the airbag cushion 32 directly pushes up the seat surface 26, a push-up member may be interposed between the airbag cushion 32 and the seat surface 26. In other words, when the airbag cushion 32 expands, the airbag may tilt or rotate a push-up member (for example, a plate with an upwardly inclined front-end), thereby pushing up the seat surface 26 via the push-up member.

In addition, in consideration of the severity of the collision and the layout, the inflators 34a and 34b may have different performances. In this case, the output of the inflator 34b is preferably greater than the output of the inflator 34a, but the reverse may be possible depending on the severity of the collision and the layout.

In addition, in FIG. 5, the internal pressure data from the inflator 34 has two peaks (an initial peak value P1 and a later peak value P2), but is not limited to this. For example, the internal pressure data from the inflator 34 may be a gradual straight line rising to the right, or may be a two-step curve with no valley.

<Additional Considerations for Various Embodiments>

### Embodiment 1

An occupant protection device provided inside or below a seat cushion of a vehicle seat, the occupant protection device containing:
an airbag cushion expandable so as to push up a seat surface of the seat cushion; and
at least one inflator that activates in a vehicle emergency,
wherein
the at least one inflator is configured to operate at least once at a timing during the vehicle emergency to supply expansion gas to an internal space of the airbag cushion, and
supply timing of the expansion gas to the airbag cushion is controlled, based on sensing from a vehicle, by variably controlling a timing at which gas is generated from at least one or more gas-generating parts.

### Embodiment 2

An occupant protection device provided inside or below a seat cushion of a vehicle seat, the occupant protection device containing:
an airbag cushion expandable so as to push up a seating surface of the seat cushion; and
at least one inflator that activates in a vehicle emergency; wherein
the at least one inflator is configured to activate at least twice at respective timings during the vehicle emergency to supply expansion gas to an internal space of the airbag cushion at least twice.

### Embodiment 3

The occupant protection device according to Embodiment 1 or 2, wherein
the at least one inflator includes a first inflator and a second inflator, each of which is capable of supplying expansion gas to an internal space of the airbag cushion, and
activation timing of the first inflator and of the second inflator during the vehicle emergency are different.

### Embodiment 4

The occupant protection device according to Embodiment 3, wherein the first inflator and the second inflator have the same performance.

### Embodiment 5

The occupant protection device according to Embodiment 3 or 4, wherein the first inflator and the second inflator are provided at different positions in the vehicle front-to-back direction.

### Embodiment 6

The occupant protection device according to any one of Embodiments 3 to 5, wherein the second inflator is activated 15 to 40 msec later than the first inflator.

### Embodiment 7

The occupant protection device according to any one of Embodiments 3 to 6, further comprising:
a controller connected to the first inflator and the second inflator, wherein
during a vehicle emergency, the controller:
   outputs an activation signal to the first inflator so that the first inflator activates at a first timing, and
   outputs an activation signal to the second inflator so that the second inflator activates at a second timing different from the first timing.

### Embodiment 8

The occupant protection device according to Embodiment 1 or 2, wherein
the at least one inflator includes an inflator having a plurality of squibs including a first squib and a second squib that respectively ignite during a vehicle emergency, and
an ignition timing of the first squib and an ignition timing of the second squib during the vehicle emergency are different.

### Embodiment 9

The occupant protection device according to Embodiment 8, wherein the second squib ignites 15 to 40 msec later than the first squib.

### Embodiment 10

The occupant protection device according to Embodiment 8 or 9, further containing:
a controller connected to the inflator, wherein
during a vehicle emergency, the controller:
   outputs an ignition signal to the first squib so that the first squib ignites at a first timing, and
   outputs an ignition signal to the second squib so that the second squib ignites at a second timing different from the first timing.

### Embodiment 11

The occupant protection device according to any one of Embodiments 1 to 10, wherein the airbag cushion is disposed on a seat pan and configured to expand and deploy using the seat pan as a reaction surface.

### Embodiment 12

The occupant protection device according to Embodiment 11, wherein the airbag cushion is attached to the seat pan by the at least one inflator.

### Embodiment 13

The occupant protection device according to any one of Embodiments 1 to 12, wherein, when an occupant is seated on the seat cushion in a normal posture and has a seat belt fastened, expansion of the airbag cushion promotes rearward bending rotation of a waist of the occupant.

### Embodiment 14

The occupant protection device according to Embodiment 7, wherein
the first timing is earlier than the second timing,
the second timing is a timing after an internal pressure of the airbag cushion begins to decrease after reaching an initial peak value due to activation of the first inflator and before the internal pressure of the airbag cushion has fully decreased, and
the internal pressure of the airbag cushion reaches a subsequent peak value exceeding the initial peak value due to activation of the second inflator.

### Embodiment 15

The occupant protection device according to any one of Embodiments 1 to 13, wherein, in an expanded and deployed state of the airbag cushion, a top of a front part is positioned above a top of a rear part.

### Embodiment 16

An occupant protection device according to Embodiment 5, in which, of the first inflator and the second inflator, the one installed on the front side of the vehicle activates first.

### DESCRIPTION OF CODES

1. Seatback, 2. Seat cushion, 3. Headrest, 4. Reclining mechanism, 10. Back frame, 20. Seat frame, 22. Side frame, 24. Seat pan, 24a. Mounting surface, 25. Spring, 26. Seat surface, 30. Occupant protection device, 32. Airbag cushion, 32a. Front part, 32b. Rear part, 32c. Center, 34, 34a, 34b. Inflator, 35. Stud bolt, 60. Control configuration, 70. Controller, 71. CPU, 72. Memory, 73. Input/output interface, 75. Sensor, 81, 82. Arrows, t1. First timing, t2. Second timing, 300. Seatbelt, 310. Airbag cushion for front airbag, 400a, 400b. Squib, P. OCCUPANT

## Claims

1. An occupant protection device provided inside or below a seat cushion of a vehicle seat, the occupant protection device containing:
an airbag cushion expandable so as to push up a seat surface of the seat cushion; and
at least one inflator that activates in a vehicle emergency,
wherein
the at least one inflator is configured to operate at least once at a timing during the vehicle emergency to supply expansion gas to an internal space of the airbag cushion, and
supply timing of the expansion gas to the airbag cushion is controlled, based on sensing from a vehicle, by variably controlling a timing at which gas is generated from at least one or more gas-generating parts.

2. An occupant protection device provided inside or below a seat cushion of a vehicle seat, the occupant protection device containing:
an airbag cushion expandable so as to push up a seating surface of the seat cushion; and
at least one inflator that activates in a vehicle emergency; wherein
the at least one inflator is configured to activate at least twice at respective timings during the vehicle emergency to supply expansion gas to an internal space of the airbag cushion at least twice.

3. The occupant protection device according to claim 1 or 2, wherein
the at least one inflator includes a first inflator and a second inflator, each of which is capable of supplying expansion gas to an internal space of the airbag cushion, and
activation timing of the first inflator and of the second inflator during the vehicle emergency are different.

4. The occupant protection device according to claim 3, wherein the first inflator and the second inflator have the same performance.

5. The occupant protection device according to claim 3, wherein the first inflator and the second inflator are provided at different positions in the vehicle front-to-back direction.

6. The occupant protection device according to claim 3, wherein the second inflator is activated 15 to 40 msec later than the first inflator.

7. The occupant protection device according to claim 3, further comprising:
a controller connected to the first inflator and the second inflator, wherein
during a vehicle emergency, the controller:
outputs an activation signal to the first inflator so that the first inflator activates at a first timing, and
outputs an activation signal to the second inflator so that the second inflator activates at a second timing different from the first timing.

8. The occupant protection device according to claim 1 or 2, wherein
the at least one inflator includes an inflator having a plurality of squibs including a first squib and a second squib that respectively ignite during a vehicle emergency, and
an ignition timing of the first squib and an ignition timing of the second squib during the vehicle emergency are different.

9. The occupant protection device according to claim 8, wherein the second squib ignites 15 to 40 msec later than the first squib.

10. The occupant protection device according to claim 8, further comprising:
a controller connected to the inflator, wherein
during a vehicle emergency, the controller:
outputs an ignition signal to the first squib so that the first squib ignites at a first timing, and
outputs an ignition signal to the second squib so that the second squib ignites at a second timing different from the first timing.

11. The occupant protection device according to claim 1 or 2, wherein the airbag cushion is disposed on a seat pan and configured to expand and deploy using the seat pan as a reaction surface.

12. The occupant protection device according to claim 11, wherein the airbag cushion is attached to the seat pan by the at least one inflator.

13. The occupant protection device according to claim 1 or 2, wherein, when an occupant is seated on the seat cushion in a normal posture and has a seat belt fastened, expansion of the airbag cushion promotes rearward bending rotation of a waist of the occupant.

14. The occupant protection device according to claim 7, wherein
the first timing is earlier than the second timing,
the second timing is a timing after an internal pressure of the airbag cushion begins to decrease after reaching an initial peak value due to activation of the first inflator and before the internal pressure of the airbag cushion has fully decreased, and
the internal pressure of the airbag cushion reaches a subsequent peak value exceeding the initial peak value due to activation of the second inflator.

15. The occupant protection device according to claim 1 or 2, wherein, in an expanded and deployed state of the airbag cushion, a top of a front part is positioned above a top of a rear part.
